Europäisches Patentamt

European Patent Office

Office européen des brevets

(19)

(11) **EP 1 159 586 B1**

(12) **EUROPÄISCHE PATENTSCHRIFT**

(45) Veröffentlichungstag und Bekanntmachung des Hinweises auf die Patenterteilung:
**15.12.2004   Patentblatt 2004/51**

(21) Anmeldenummer: **00909053.1**

(22) Anmeldetag: **22.02.2000**

(51) Int Cl.7: **G01C 21/34**

(86) Internationale Anmeldenummer:
**PCT/DE2000/000488**

(87) Internationale Veröffentlichungsnummer:
**WO 2000/052423 (08.09.2000 Gazette 2000/36)**

(54) **NAVIGATIONSVERFAHREN UND NAVIGATIONSSYSTEM ZUM BESTIMMEN EINER ROUTE VON EINEM STARTORT ZU EINEM ZIELORT FÜR EIN FORTBEWEGUNGSMITTEL**

NAVIGATION METHOD AND NAVIGATION SYSTEM FOR DETERMINING A ROUTE FOR A MEANS OF TRANSPORT MOVING FROM A STARTING POINT TO A DESTINATION

PROCEDE ET SYSTEME DE NAVIGATION POUR DETERMINER L'ITINERAIRE D'UN MOYEN DE DEPLACEMENT ENTRE UN LIEU DE DEPART ET UNE DESTINATION

(84) Benannte Vertragsstaaten:
**DE FR GB IT**

(30) Priorität: **02.03.1999   DE 19908941**

(43) Veröffentlichungstag der Anmeldung:
**05.12.2001   Patentblatt 2001/49**

(73) Patentinhaber: **ROBERT BOSCH GMBH**
**70442 Stuttgart (DE)**

(72) Erfinder:
• **LAU, Stefan**
**D-31180 Giesen (DE)**
• **SCHMIDT, Heinrich**
**D-31199 Diekholzen (DE)**
• **HOFFMANN, Ralf**
**D-31137 Hildesheim (DE)**

(56) Entgegenhaltungen:
**EP-A- 0 323 229          EP-A- 0 575 943**
**EP-A- 0 660 289          WO-A-92/14215**

**Beschreibung**

Technisches Gebiet

Die Erfindung betrifft ein Navigationsverfahren zum Bestimmen einer Route von einem Startort zu einem Zielort für ein Fortbewegungsmittel, insbesondere für ein Kraftfahrzeug, Flugzeug oder Schiff, wobei die Route auf der Basis einer digitalen Datenbasis berechnet wird, welche vorbestimmte Wegstrecken $W_i$ mit entsprechend zugeordneten Knotenpunkten $N_i$, welche jeweilige Wegstrecken $W_i$ miteinander verbinden, umfaßt, wobei den Wegstrecken $W_i$ und/oder den Knotenpunkten $N_i$ jeweilige Gewichte $G_i$ zugeordnet sind, gemäß dem Oberbegriff des Anspruchs 1. Die Erfindung betrifft ferner ein Navigationssystem zum Bestimmen einer Route von einem Startort zu einem Zielort für ein Fortbewegungsmittel, insbesondere für ein Kraftfahrzeug, Flugzeug oder Schiff, wobei zum Berechnen der Route eine digitale Datenbasis vorgesehen ist, welche vorbestimmte Wegstrecken $W_i$ mit entsprechend zugeordneten Knotenpunkten $N_i$, welche jeweilige Wegstrecken $W_i$ miteinander verbinden, umfaßt, wobei den Wegstrecken $W_i$ und/oder den Knotenpunkten $N_i$ jeweilige Gewichte $G_i$ zugeordnet sind, gemäß dem Oberbegriff des Anspruchs 8.

Stand der Technik

Navigationssysteme, wie beispielsweise auf der Basis von GPS (Global Positioning System), unterstützen einen Führer eines Fortbewegungsmittels bei der Navigation zu einem vorbestimmten Ziel. Hierbei bestimmt das Navigationssystem einen optimalen Weg bzw. eine optimale Route zumindest auf der Basis von Start- und Zielkoordinaten und einer entsprechenden digitalen Datenbasis, welche im wesentlichen ein Abbild des realen Straßennetzes ist und auch als digitale Karte bezeichnet wird. Herkömmliche Navigationssysteme berechnen eine Route zwischen zwei Punkten unter Berücksichtigung von vorab definierten mittleren Geschwindigkeiten, die für jede der in der digitalen Karte vorhandenen Straßentypen fest abgelegt sind. Allenfalls lassen sich, ähnlich wie bei PC-basierten Routensuchprogrammen, vom Benutzer für die Strassenklassen eigene Richtwerte definieren, welche jedoch häufig nicht den wirklichen Mittelwerten, sondern auf Annahmen des Benutzers beruhen. Neuerdings gibt es auch eine Anpassung dieser Geschwindigkeiten auf Basis der aktuellen Verkehrslage, was als "dynamische Navigation" bezeichnet wird. Diese Systeme sind jedoch aufwendig und teuer, da sie eine Datenverbindung vom Navigationssystem zu einer Telematikzentrale benötigen.

Dieser Stand der Technik ist aus den Dokumenten EP-A-0 323 229 und WO-A- 9 214 215 bekannt.

Darstellung der Erfindung, Aufgabe, Lösung, Vorteile

Es ist Aufgabe der vorliegenden Erfindung, ein verbessertes Navigationsverfahren der obengenannten Art zur Verfügung zu stellen sowie ein verbessertes Navigationssystem der o.g. Art zur Verfügung zu stellen, welche die obengenannten Nachteile beseitigen.

Diese Aufgabe wird durch ein Navigationssystem der o.g. Art mit den in Anspruch 1 gekennzeichneten Merkmalen gelöst.

Dies hat den Vorteil, dass die Gewichtung einer in der digitalen Karte abgebildeten Straße nicht mehr konstant ist sondern als Funktion der Zeit betrachtet bzw. bestimmt wird. Hierdurch werden unter Berücksichtigung von tageszeitlichen Verkehrsdichteschwankungen realistischere Angaben für eine berechnete, voraussichtliche Fahrtdauer erzielt. Zusätzlich ist die berechnete Route einer jeweiligen Tageszeit angepasst, da zu Hauptverkehrszeiten Hauptverkehrsstrecken stärker von einer Reduktion einer möglichen mittleren Geschwindigkeit betroffen sind als Nebenstrecken.

Vorzugsweise Weitergestaltungen des Navigationssystem sind in den Ansprüchen 2 bis 6 beschrieben.

Beispielsweise werden für jede Wegstrecke $W_i$ zwei Gewichte $G_i$ für zwei Tageszeiten verwendet oder die Gewichte $G_i$ als Funktion der Zeit t als $G_i(t)$ bestimmt.

In einer bevorzugten Ausführungsform werden die Gewichte $G_i$ aus dem Produkt $G_i = L_i * K_i$ berechnet, wobei $L_i$ eine Länge der Wegstrecke $W_i$ und $K_i$ eine auf der Wegstrecke $W_i$ möglichen Durchschnittsgeschwindigkeit proportionale Wegstreckenklasse ist. Zur Variation der Gewichte $G_i$ wird die dieser Wegstrecke $W_i$ zugeordnete Wegstreckenklasse $K_i$ tageszeitabhängig variiert.

Eine einfache Funktion zur Umschaltung zwischen Tag- und Nachtzustand erzielt man dadurch, dass für jede Wegstrecke $W_i$ zwei Wegstrekkenklassen $K_i$ für zwei Tageszeiten verwendet werden. Diese einfache Funktion hat den Vorteil, dass der entsprechende Wert vor Beginn der Routenberechnung nur einmal berechnet werden muss und die Routenberechnung dann wie bei einer konstanten Gewichtung erfolgt. Alternativ wird die Wegstreckenklasse $K_i$ als Funktion der Zeit t als $K_i(t)$ bestimmt.

Bei einem Navigationssystem der o.g. Art sind erfindungsgemäß tageszeitabhängig variable Gewichte $G_i$ vorgesehen.

Vorteilhafte Ausgestaltungen des Navigationssystems sind in den abhängigen Ansprüchen 2-6 beschrieben.

So sind. beispielsweise für jede Wegstrecke $W_i$ zwei Gewichte $G_i$ für zwei Tageszeiten vorgesehen oder es ist eine vorbestimmte Funktion der Zeit t vorgesehen, welche, die Gewichte $G_i$ zeitabhängig zu $G_i(t)$ variiert.

In einer bevorzugten Ausführungsform entsprechen die Gewichte $G_i$ dem Produkt $G_i = L_i * K_i$, wo-

bei $L_i$ eine Länge der Wegstrecke $W_i$ und $K_i$ eine auf der Wegstrecke $W_i$ möglichen Durchschnittsgeschwindigkeit proportionale Wegstreckenklasse ist. Zur Variation der Gewichte $G_i$ sind hierbei die dieser Wegstrecke $W_i$ zugeordneten Wegstrecken klassen $K_i$ tageszeitabhängig vorgesehen.

Eine einfache Funktion zur Umschaltung zwischen Tag- und Nachtzustand erzielt man dadurch, dass für jede Wegstrecke $W_i$ zwei Wegstreckenklassen $K_i$ für zwei Tageszeiten vorgesehen sind. Diese einfache Funktion hat den Vorteil, dass der entsprechende Wert vor Beginn der Routenberechnung nur einmal berechnet werden muss und die Routenberechnung dann wie bei einer konstanten Gewichtung erfolgt. Alternativ ist eine vorbestimmte Funktion der Zeit t vorgesehen, welche die Wegstreckenklasse $K_i$ zeitabhängig zu $K_i(t)$ variiert.

Kurze Beschreibung der Zeichnungen

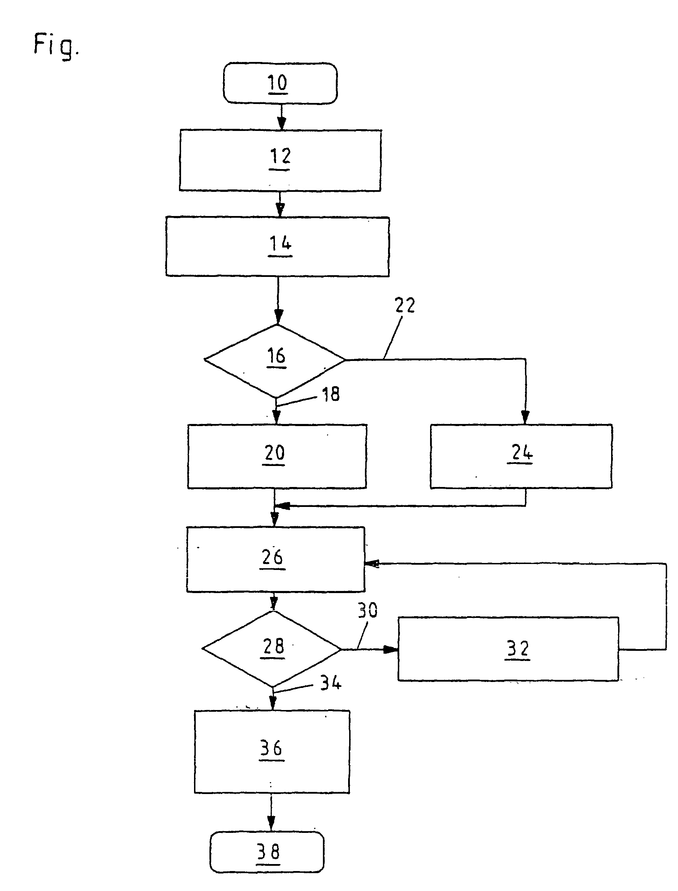

Nachstehend wird die Erfindung anhand der beigefügten Zeichnung näher erläutert. Diese zeigt in der einzigen Figur ein Blockschaltbild einer bevorzugten Ausführungsform eines erfindungsgemäßen Navigationssystems.

Bester Weg zur Ausführung der Erfindung

Die konkrete Realisation der Erfindung in einem Navigationssystem hängt von der Art des Algorithmus zur Routenberechnung ab. In der nachfolgend beschriebenen bevorzugten Ausführungsform der Erfindung wird lediglich beispielhaft angenommen, dass die Gewichtung $G_i$ einer Wegstrecke bzw. Streckenabschnittes $W_i$ proportional zu einer Wegstrecken- bzw. Strassenklasse $K_i$ und einer Länge $L_i$ dieser Wegstrecke bzw. dieses Abschnittes ist. Das Gewicht $G_i$ der Wegstrecke $W_i$ bestimmt sich dann aus dem Produkt

$$G_i = L_i * K_i.$$

Für die kürzeste Strecke wird $K_i = 1$ gesetzt und die Summe G wird minimiert. Für die schnellste Strecke ist $K_i$ umgekehrt proportional zu der auf dem Abschnitt bzw. der Wegstrecke $W_i$ möglichen Geschwindigkeit. $K_i$ wird beispielsweise in s/km (Sekunde pro Kilometer) gemessen. Erfindungsgemäß sind dann beispielsweise zwei $K_i$-Tabellen für zwei verschiedene Tageszeiten vorgesehen. Die Tageszeiten sind beispielsweise von 7:00 Uhr bis 19:00 (Tag) Uhr und von 19:00 Uhr bis 7:00 (Nacht) Uhr. Je nach momentaner Uhrzeit wird die Strassenklasse $K_i$ dann aus einer $K_i^{7-19}$-Tabelle oder aus einer $K_i^{19-7}$-Tabelle entnommen. Alternativ wird die Gewichtung $G_i$ als Funktion der Zeit t gemäß der Formel

$$G_i(t) = L_i * K_i(t)$$

bestimmt. Letzteres hat den Vorteil, dass bei einem leistungsfähigeren System zusätzlich noch die Hauptverkehrszeiten als tageszeitliche Schwankungen der Verkehrsdichte berücksichtigt werden können. Entsprechende Ganglinien sind als Mittelwerte für die meisten Straßen bekannt und dienen daher beispielsweise als Grundlage für eine "universelle" Kennlinie $K_i(t)$.

In der nachfolgenden Beschreibung einer bevorzugten Ausführungsform der Erfindung anhand der einzigen Figur wird von dem ersten Fall ausgegangen, bei dem eine Aufteilung der Tageszeit in "Tag" und "Nacht" erfolgt. Bei 10 startet das Navigationssystem das Navigationsverfahren und bei 12 erfolgt eine Initialisierung, wobei ein Benutzer einen Zielpunkt eingibt. Der Ausgangspunkt wird bei 14 automatisch beispielsweise mittels GPS (Global Positioning System bzw. Satelliten-Navigationssystem) als der momentane Standort ermittelt. Ferner wird die Tageszeit bestimmt. In Block 16 wird geprüft, ob die Zeit zwischen 7:00 Uhr und 19:00 Uhr liegt. Falls ja, wird mit Zweig 18 fortgefahren und in 20 eine Route basierend auf den Tageswerten der Gewichte $G_i$(Tag) mit Strassenklassen $K_i$ aus der $K_i^{7-19}$-Tabelle berechnet. Falls nein, wird mit Zweig 22 fortgefahren und in 24 eine Route basierend auf den Nachtwerten der Gewichte $G_i$(Nacht) mit Strassenklassen $K_i$ aus der $K_i^{19-7}$-Tabelle berechnet. In Block 26 beginnt der Zielführungsmodus, bei dem der Benutzer durch optische und/oder akustische Signale bzw. Kommandos entlang der berechneten Route geführt wird.

In Block 28 wird, beispielsweise jedesmal nach Erreichen eines Knotenpunktes $N_i$ zwischen zwei Wegstrecken $W_i$ und $W_{i+1}$, geprüft, ob das Ziel erreicht wurde. Wenn nicht, dann wird mit Zweig 30 fortgefahren und in Block 32 die aktuelle Position beispielsweise mittels GPS, die Strassenklasse und die Zeit bestimmt und anschließend wird erneut der Zielführungsmodus 26 ausgeführt. Wenn die Prüfung in 28 "ja" ergibt, so wird mit Zweig 34 fortgefahren und in 36 die Benutzer über das Erreichen des Zielortes informiert. Ferner wird der Navigationsmodus beendet. In Block 38 endet schließlich das Navigationsverfahren.

**Patentansprüche**

1. Navigationssystem zum Bestimmen einer Route von einem Startort zu einem Zielort für ein Fortbewegungsmittel, insbesondere für ein Kraftfahrzeug, Flugzeug oder Schiff, wobei zum Berechnen der Route eine digitale Kartenbasis vorgesehen ist, welche vorbestimmte Wegstrecken $W_i$ mit entsprechend zugeordneten Knotenpunkten $N_i$, welche jeweilige Wegstrecken $W_i$ miteinander verbinden, umfaßt, wobei den Wegstrecken $W_i$ und/oder den Knotenpunkten $N_i$ jeweilige Gewichte $G_i$ zugeord-

net sind, **dadurch gekennzeichnet, daß** tageszeitabhängig variable Gewichte $G_i$ vorgesehen sind, und daß die Gewichte dem Produkt $G_i = L_i * K_i$ entsprechen, wobei $L_i$ eine Länge der Wegstrecke $G_i$ und $K_i$ eine einer auf der Wegstrecke $W_i$ möglichen Durchschnittsgeschwindigkeit umgekehrt proportionale Wegstreckenklasse $K_i$ ist.

2. Navigationssystem nach Anspruch 1, **dadurch gekennzeichnet, dass** für jede Wegstrecke $W_i$ zwei Gewichte $G_i$ für zwei Tageszeiten vorgesehen ist.

3. Navigationssystem nach Anspruch 1 oder 2, **dadurch gekennzeichnet, dass** eine vorbestimmte Funktion der Zeit t vorgesehen ist, welche, die Gewichte $G_i$ zeitabhängig zu $G_i$ (t) variiert.

4. Navigationssystem nach einem der vorhergehenden Ansprüche, **dadurch gekennzeichnet, dass** zur Variation der Gewichte $G_i$ die dieser Wegstrecke $W_i$ zugeordnete, tageszeitabhängige Wegstreckenklasse $K_i$ vorgesehen sind

5. Navigationssystem nach einem der vorhergehenden Ansprüche, **dadurch gekennzeichnet, dass** für jede Wegstrecke $W_i$ zwei Wegstreckenklassen $K_i$ für zwei Tageszeiten vorgesehen sind.

6. Navigationssystem nach einem der Anspruch 1 bis 4, **dadurch gekennzeichnet, dass** eine vorbestimmte Funktion der Zeit t vorgesehen ist, welche die Wegstreckenklasse $K_i$ zeitabhängig zu $K_i(t)$ variiert.

## Claims

1. Navigation system for determination of a route from a start point to a destination point for a transportation means, in particular for a motor vehicle, aircraft or ship, with a digital map base being provided for calculation of the route, comprising predetermined routes $W_i$ with correspondingly associated nodes $N_i$ which connect respective routes $W_i$ to one another, with the routes $W_i$ and/or the nodes $N_i$ being allocated respective weights $G_i$, **characterized in that** weights $G_i$ which are variable as a function of the time of day are provided, and **in that** the weights correspond to the product $G_i = L_i * K_i$, with $L_i$ being a length of the route $G_i$ and $K_i$ being a route class $K_i$ which is inversely proportional to the average speed which is possible on that route $W_i$.

2. Navigation system according to Claim 1, **characterized in that** two weights $G_i$ are provided for two times of day for each route $W_i$.

3. Navigation system according to Claim 1 or 2, **char-**acterized in that a predetermined function of the time t is provided which varies the weights $G_i$ as a function of time to give $G_i(t)$.

4. Navigation system according to one of the preceding claims, **characterized in that** the route class $K_i$ which is a function of the time of day and is allocated to this route $W_i$ is provided for variation of the weights $G_i$.

5. Navigation system according to one of the preceding claims, **characterized in that** two route classes $K_i$ are provided for two times of day for each route $W_i$.

6. Navigation system according to one of Claims 1 to 4, **characterized in that** a predetermined function of the time t is provided, which varies the route class $K_i$ as a function of time to give $K_i(t)$.

## Revendications

1. Système de navigation pour déterminer un itinéraire d'un lieu de départ à un lieu de destination pour un moyen de locomotion, en particulier pour un véhicule automobile, un avion ou un bateau, dans lequel, pour le calcul de l'itinéraire, une base de cartes numériques comprend des trajets prédéterminés $W_i$ et des noeuds $(N_i)$ convenablement associés qui relient entre eux les trajets $W_i$, des poids $G_i$ respectifs étant attribués aux trajets $W_i$ et/ou aux noeuds $N_i$,
**caractérisé par**
des poids $G_i$ variables en fonction d'une période de la journée, les poids correspondant au produit $G_i = L_i * A_i$, L étant une longueur du trajet $G_i$, et $K_i$ étant une classe de trajet $K_i$ inversement proportionnelle à une vitesse moyenne possible sur le trajet $W_i$.

2. Système de navigation selon la revendication 1,
**caractérisé en ce que**
pour chaque trajet $W_i$, il est prévu deux poids $G_i$ pour deux périodes de la journée.

3. Système de navigation selon la revendication 1 ou 2,
**caractérisé en ce qu'**
il est prévu une fonction prédéterminée du temps t qui fait varier les poids $G_i$ en fonction du temps, pour donner $G_i$ (t).

4. Système de navigation selon une des revendications précédentes,
**caractérisé en ce que**
pour la variation des poids $G_i$, les classes de trajets $K_i$ dépendants de la période de la journée, sont attribuées à ces trajets $W_i$.

**5.** Système de navigation selon une des revendications précédentes,
**caractérisé en ce que**
pour chaque trajet $W_i$, deux classes de trajets $K_i$ sont prévus pour deux périodes de la journée.

**6.** Système de navigation selon une des revendications 1 à 4,
**caractérisé en ce qu'**
une fonction prédéterminée du temps $t$ fait varier la classe de trajet $K_i$ en fonction du temps pour donner $K_i (t)$.

Fig.